# FASCICULE DE BREVET EUROPEEN

(11) **EP 1 405 762 B1**
(45) Date de publication et mention de la délivrance du brevet: **15.06.2005**
(21) Numéro de dépôt: 03292268.4
(22) Date de dépôt: 15.09.2003
(51) Int. Cl.: B60Q 1/068

(54) **Projecteur d'éclairage de véhicule automobile comportant un élément d'articulation en appui sur le boîtier**
Kfz-Scheinwerfer mit einem von dem Gehäuse gestützten Gelenkelement
Vehicle headlamp with a joint-type element supported on the housing

(30) Priorité: 02.10.2002 FR 0212206
(43) Date de publication de la demande: 07.04.2004
(73) Titulaire: VALEO VISION, 93012 Bobigny Cédex (FR)
(72) Inventeur: Casses, Daniel, 93370 Monffermeil (FR); Masse, Jean, 95130 Franconville (FR)

(56) Documents cités:
- EP-A- 0 605 172
- FR-A- 2 619 539
- FR-A- 2 654 186

## Description

L'invention concerne un projecteur d'éclairage de véhicule automobile.

L'invention concerne plus particulièrement un projecteur d'éclairage de véhicule automobile, du type qui comporte au moins un boîtier au moins ouvert vers l'avant à l'intérieur duquel est reçu un module d'éclairage, notamment un réflecteur, dont une face arrière est fixée dans le boîtier par l'intermédiaire d'au moins un élément d'articulation comportant une tige de direction axiale sensiblement horizontale, portée par le boîtier, dont une extrémité comporte une tête sphérique qui est reçue dans un logement conforme d'une capsule qui est solidaire du module d'éclairage, de manière que l'élément d'articulation forme une rotule permettant l'articulation du module d'éclairage par rapport au boîtier au moins autour de la rotule.

On connaît du document FR-A-2 654 186 un projecteur selon le préambule de la revendication 1.

L'arrangement de ce projecteur a pour but de permettre le démontage rapide et sans problème du dispositif d'actionnement, sans nécessiter d'outillage spécial.

Dans la quasi-totalité des projecteurs actuels, le module d'éclairage est maintenu dans le boîtier par au moins une et généralement plusieurs tiges du type décrit précédemment. De ce fait une partie du poids du projecteur s'exerce en porte-à-faux à l'extrémité de chacune de ces tiges.

Cette conception ne peut s'appliquer à des modules d'éclairage de poids élevé du type de ceux développés actuellement, qui présentent un poids de l'ordre du kilogramme.

En effet, du fait des vibrations que le véhicule subit fonctionnement, un poids élevé peut provoquer une usure accélérée de la capsule, et il s'ensuit une dégradation voire une rupture de la liaison entre le module d'éclairage et le boîtier, d'où un déréglage du module d'éclairage qui ne remplit alors plus sa fonction d'éclairage dans des normes de sécurité acceptables.

Pour remédier à cet inconvénient, l'invention propose un projecteur du type décrit précédemment, qui est équipé de moyens de réduction du porte-à-faux entre la capsule et le boîtier.

Dans ce but, l'invention propose un projecteur du type décrit précédemment, caractérisé en ce qu'il comporte au moins un caisson de maintien, qui est traversé par au moins une partie de la tige, qui est porté par une paroi du boîtier, et dont un logement reçoit la capsule en appui vertical sensiblement au droit de la rotule, pour que le poids du module d'éclairage soit reporté sur le boîtier et éviter ainsi que le module d'éclairage ne soit en porte-à-faux sur la rotule, et en ce qu'une paroi latérale du caisson porte deux ailes qui sont reçues dans une glissière qui est portée par la paroi associée du boîtier.

Selon d'autres caractéristiques de l'invention :
- le caisson est creux et sensiblement parallélépipédique, et la capsule comporte au moins deux éléments d'appui, opposés verticalement, qui sont reçus dans le caisson entre deux parois horizontales opposées du caisson parallélépipédique.
- chaque élément d'appui présente, en section dans un plan vertical parallèle à la direction axiale, une portée d'appui de forme arrondie afin de permettre l'articulation verticale de la capsule dans le caisson quelle que soit l'inclinaison du module d'éclairage par rapport au boîtier,
- une paroi latérale du caisson est portée par une paroi associée du boîtier,
- la glissière qui est portée par la paroi associée du boîtier est orientée parallèlement à la tige,
- le caisson est de surcroît maintenu par l'intermédiaire d'une portée tubulaire axiale du boîtier, entourant la tige, qui traverse un perçage d'une paroi verticale arrière du caisson,
- le caisson comporte des moyens de verrouillage par rapport au boîtier,
- les moyens de verrouillage comportent une agrafe en accordéon dont un pli est destiné à chevaucher une patte en saillie du boîtier et dont un autre pli est destiné à traverser une fente de la paroi arrière du caisson et à pincer une paroi latérale du caisson agencée à proximité de la fente,
- les moyens de verrouillage comportent une agrafe qui est susceptible d'être introduite perpendiculairement à la direction axiale par une fente d'une paroi latérale du caisson dans un logement du caisson qui est agencé en regard du perçage de la paroi verticale arrière du caisson pour enserrer la portée tubulaire du boîtier,
- l'élément d'articulation est fixe et la tige est fixée dans la portée tubulaire du boîtier,
- l'élément d'articulation est fixe et la tige est portée par un élément parallélépipédique qui est emboîté dans le caisson,
- la capsule comporte au moins deux éléments supplémentaires de maintien, opposés horizontalement, qui sont reçus dans le caisson entre deux parois verticales opposées du caisson parallélépipédique,
- chaque élément supplémentaire de maintien présente, en section dans un plan horizontal parallèle à la direction axiale, une portée de maintien de forme arrondie afin de permettre l'articulation horizontale de la capsule dans le caisson quelle que soit l'orientation du module d'éclairage par rapport au boîtier,
- l'élément d'articulation est mobile, la capsule étant fixe axialement et libre en rotation par rapport au caisson mobile, et la tige est montée coulissante au travers de la portée tubulaire du boîtier,
- l'élément d'articulation est mobile, la capsule étant mobile axialement en coulissement et libre en rotation par rapport au caisson fixe, et la tige est montée coulissante au travers de la portée tubulaire du boîtier,
- le caisson présente une section transversale sensiblement rectangulaire de dimension horizontale supérieure à sa dimension verticale et la capsule comporte au moins deux pattes rigides opposées d'un encombrement correspondant à la dimension verticale et deux pattes élastiques opposées d'un encombrement correspondant à la dimension horizontale,
- les pattes rigides forment les éléments d'appui et les pattes élastiques forment les éléments de maintien, pour former l'élément d'articulation fixe,
- les pattes élastiques forment les éléments d'appui, les pattes rigides étant reçues avec jeu dans le caisson, pour former l'élément d'articulation mobile,
- la capsule comporte quatre pattes rigides, deux à deux opposées par rapport au logement, dont les flancs opposés délimitent une gouttière constituant le logement,
- les flancs opposés des pattes rigides délimitant la gouttière comportent à leurs extrémités libres des ergots qui sont tournés vers l'intérieur de la gouttière pour immobiliser la tête sphérique de la tige,
- chaque patte élastique est conformée sous la forme d'une lame dont une seule extrémité est solidaire de la capsule.
- chaque patte élastique est conformée sous la forme d'une arche dont les deux extrémités sont solidaires de la capsule, une d'entre elles étant notamment solidaire de la patte rigide voisine,
- les pattes élastiques et les pattes rigides sont venues de matière avec la capsule.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un premier mode de réalisation de l'élément d'articulation mobile interposé entre un module d'éclairage et un boîtier pour un projecteur selon l'invention ;
- la figure 2 est une vue en coupe axiale d'un premier mode de réalisation de l'élément d'articulation fixe interposé entre un module d'éclairage et un boîtier pour un projecteur selon l'invention ;
- la figure 3a est une vue en coupe transversale par le plan 3a-3a de la figure 1 de l'élément d'articulation mobile de la figure 1 ;
- la figure 3b est une vue en coupe transversale par le plan 3b-3b de la figure 2 de l'élément d'articulation fixe de la figure 2 ;
- la figure 4 est une vue assemblée en perspective avant de l'élément d'articulation mobile de la figure 1 ;
- la figure 5a est une vue éclatée en perspective avant de l'élément d'articulation mobile de la figure 1 ;
- la figure 5b est une vue éclatée en perspective avant de l'élément d'articulation fixe de la figure 2 ;
- la figure 6 est une vue assemblée en perspective arrière de l'élément d'articulation mobile de la figure 1 ;
- la figure 7 est une vue en coupe axiale d'un deuxième mode de réalisation de l'élément d'articulation mobile interposé entre un module d'éclairage et un boîtier pour un projecteur selon l'invention ;
- la figure 8 est une vue en coupe axiale d'un deuxième mode de réalisation de l'élément d'articulation fixe entre un module d'éclairage et un boîtier pour un projecteur selon l'invention ;
- la figure 9a est une vue en coupe transversale par le plan 9a-9a de la figure 7 de l'élément d'articulation mobile de la figure 7 ;
- la figure 9b est une vue en coupe transversale par le plan 9b-9b de la figure 8 de l'élément d'articulation fixe de la figure 8 ;
- la figure 10 est une vue assemblée en perspective avant de l'élément d'articulation mobile de la figure 7 ;
- la figure 11a est une vue éclatée en perspective avant de l'élément d'articulation mobile de la figure 7 ;

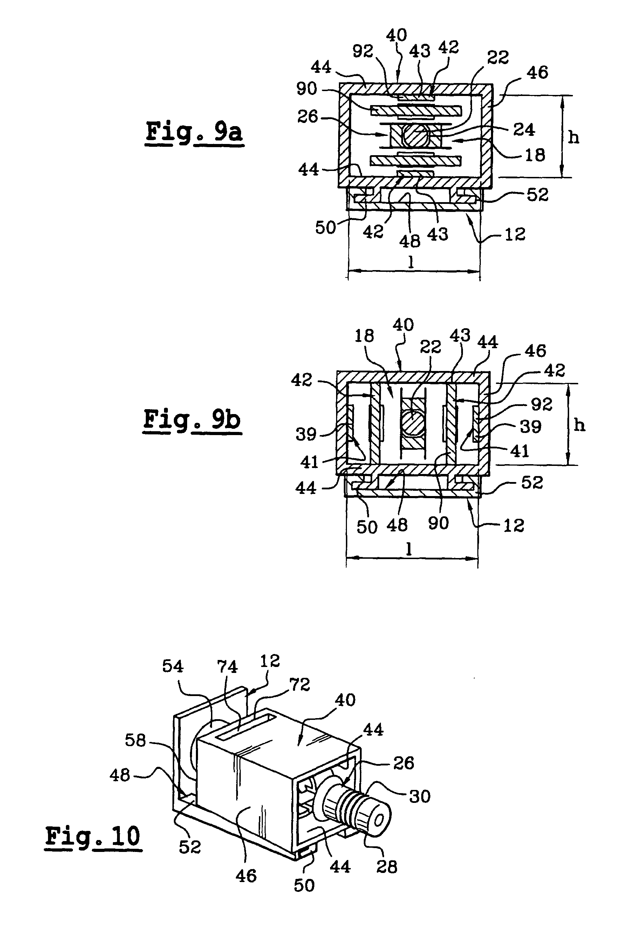

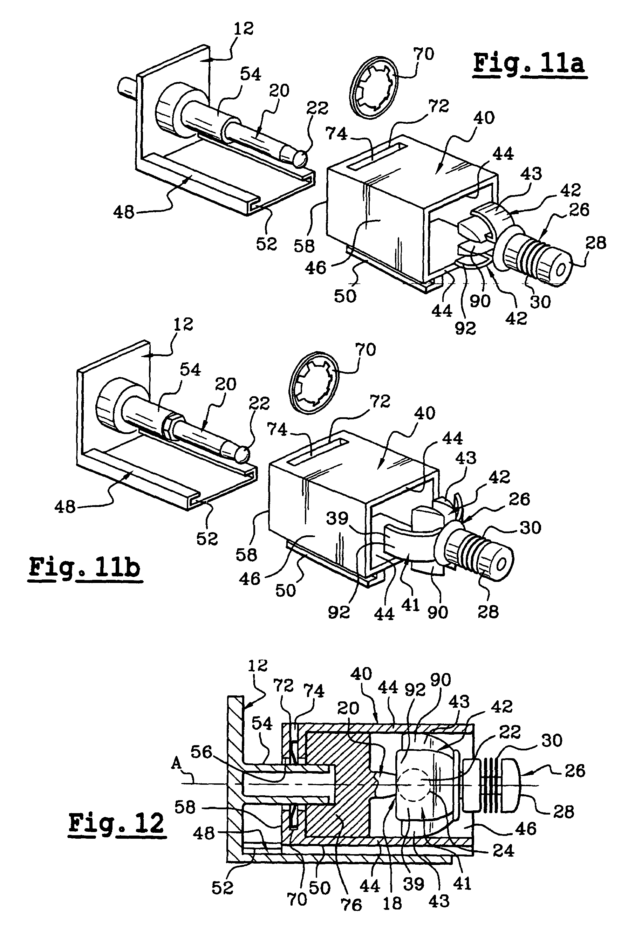

- la figure 11 b est une vue éclatée en perspective avant de l'élément d'articulation fixe de la figure 8 ;
- la figure 12 est une vue en coupe axiale d'un troisième mode de réalisation de l'élément d'articulation fixe entre un module d'éclairage et un boîtier pour un projecteur selon l'invention ;

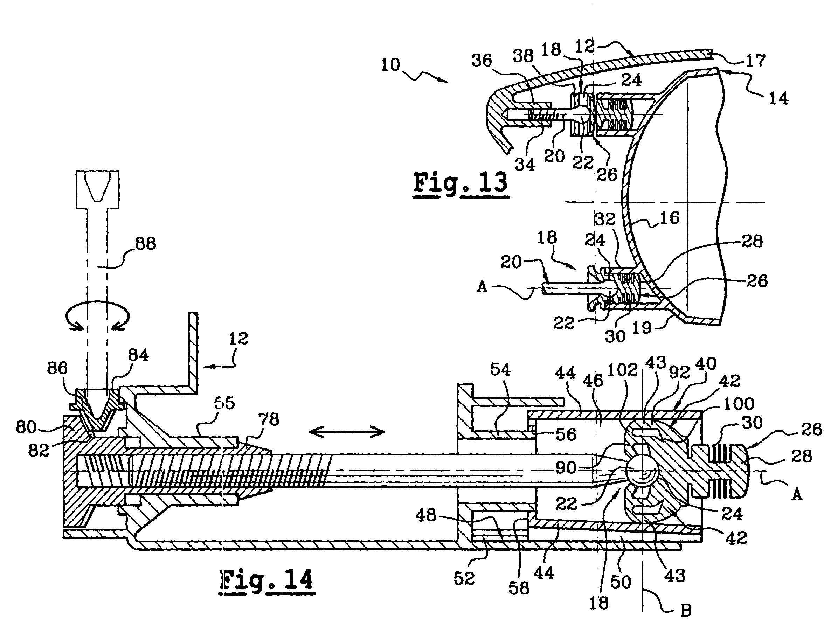

- la figure 13 est une vue en coupe axiale des éléments d'articulation d'un projecteur selon un état antérieur de la technique ;
- la figure 14 est une vue en coupe axiale des moyens de réglage de la tige par rapport au boîtier dans un troisième mode de réalisation de l'élément d'articulation mobile.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

On a représenté à la figure 13 l'ensemble d'un projecteur d'éclairage 10 conventionnel de véhicule automobile.

De manière connue le projecteur 10 comporte au moins un boîtier 12 qui est au moins ouvert du côté de son extrémité avant 17 et à l'intérieur duquel est reçu un module 14 d'éclairage, par exemple un réflecteur comportant une surface réfléchissante 16.

Une face arrière 19 du module 14 d'éclairage est fixée dans le boîtier 12 par l'intermédiaire d'au moins un élément 18 d'articulation en deux parties comportant une tige 20 de direction axiale sensiblement horizontale, portée par le boîtier 14, dont une extrémité comportant une tête sphérique 22 est reçue dans un logement 24 conforme d'une capsule 26 qui est solidaire du module d'éclairage 14.

Dans l'exemple qui a été représenté à la figure 13, le module 14 d'éclairage est fixé au boîtier 12 par l'intermédiaire de deux éléments 18 d'articulation inférieur et supérieur. La tige 20 de l'élément 18 d'articulation inférieur est par exemple mobile en coulissement suivant son axe "A" et sa tête sphérique 22 est reçue dans un logement 24, lui aussi sphérique, de la capsule 26 associée dont une extrémité 28 opposée munie d'ergots 30 est reçue dans une portée 32 tubulaire moulée dans le corps du module 14 d'éclairage. L'élément 18 d'articulation supérieur est d'une configuration sensiblement analogue, à cette différence près que sa tige 20 est fixe, que son extrémité 34 opposée à la tête sphérique 22 est vissée dans une portée 36 tubulaire moulée dans le corps du boîtier 12, et que le logement 24 de la capsule 26 présente une forme de rainure entre les ailes verticales 38 de laquelle est reçue la tête sphérique 22 de la tige 20.

De cette manière, l'élément d'articulation 26 forme une rotule permettant l'articulation du module 14 d'éclairage par rapport au boîtier 12 au moins autour de la rotule, pour régler l'inclinaison et/ou l'orientation du module 14.

Un inconvénient majeur de cette conception est qu'elle est limitée à un module 14 d'éclairage de poids réduit. En effet, on a constaté que le montage d'un module d'éclairage de poids élevé, c'est à dire d'un poids supérieur ou égal à un kilogramme, dans une telle configuration de porte-à-faux par rapport au boîtier 12, entraîne au moins l'apparition d'un jeu entre la tête sphérique 22 et le logement 24 de la capsule 26, voire une rupture de la capsule 26. Ce jeu ou cette rupture, conjugué avec les vibrations auxquelles est soumis le véhicule en fonctionnement, ne permet de maintenir un réglage satisfaisant du module 14 d'éclairage, ce qui est particulièrement pénalisant en termes de sécurité.

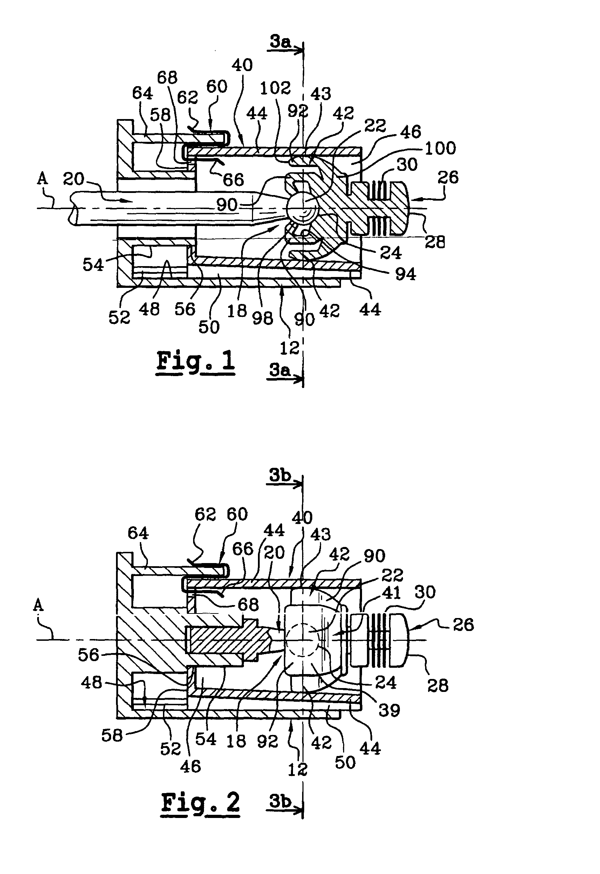

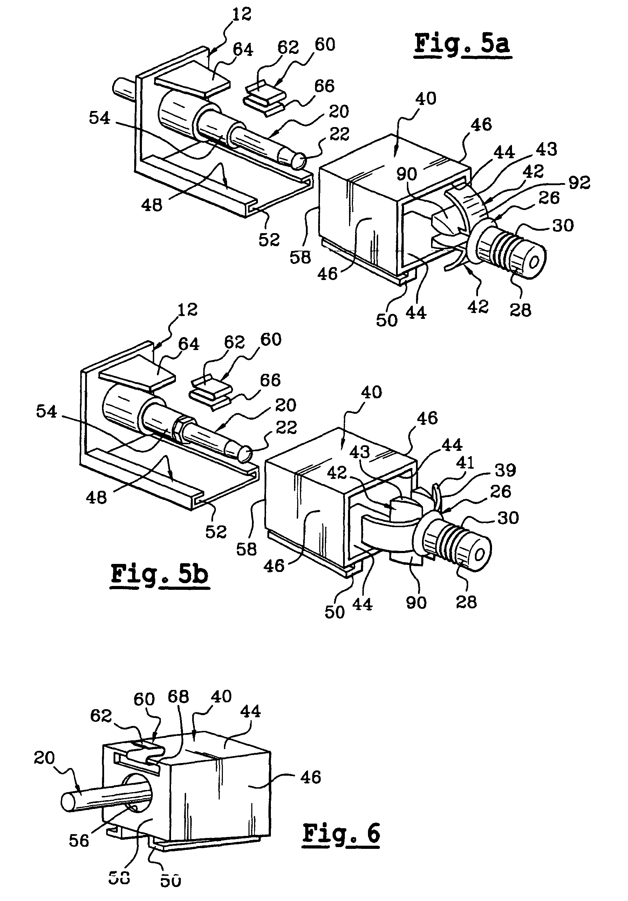

Pour remédier à cet inconvénient, comme l'illustrent les figures 1 à 12 et la figure 14, l'invention propose un projecteur 10 du type décrit précédemment, caractérisé en ce qu'il comporte au moins un caisson 40 de maintien, qui est traversé par au moins une partie de la tige 20, qui est porté par une paroi du boîtier 12, et dont un logement reçoit la capsule 26 en appui vertical sensiblement au droit de la rotule formée de la tête sphérique 22 et du logement 24, pour que le poids du module 14 d'éclairage soit reporté sur le boîtier 12 et pour éviter que le module 14 d'éclairage ne soit en porte-à-faux sur la rotule formée de la tête sphérique 22 et du logement 24.

Conformément à l'invention, le caisson 40 est creux et sensiblement parallélépipédique et il comporte quatre parois latérales, dont deux parois horizontales 44 et deux parois verticales 46 deux à deux opposées. La capsule 26 comporte d'une manière générale deux éléments d'appui 42, opposés verticalement, qui sont reçus dans le caisson 40 entre les deux parois 44 horizontales opposées du caisson 40 parallélépipédique. Cette configuration permet, par l'intermédiaire des éléments d'appui 42, de reporter le poids du module d'éclairage 14 sur le caisson 40, et donc sur le boîtier 12.

Avantageusement, chaque élément d'appui 42 présente, en section dans un plan vertical parallèle à la direction axiale, qui correspond au plan des figures 1, 2, 7, 8, 12 et de la figure 14, une portée 43 d'appui de forme arrondie afin de permettre l'articulation verticale de la capsule 26 autour de la rotule dans le caisson 40 quelle que soit l'inclinaison du module 14 d'éclairage par rapport au boîtier 12.

Plus particulièrement, la forme arrondie des portées d'appui 43 des éléments d'appui 42 permet l'inclinaison de la capsule 26 dans le plan vertical autour de la rotule pour régler la hauteur du faisceau lumineux du module d'éclairage 14, mais aussi le pivotement de la capsule 26 autour d'un axe "B" théorique vertical, représenté à la figure 14, passant sensiblement par le centre de la tête sphérique 22, pour permettre l'orientation du module d'éclairage dans un plan transversal perpendiculaire au plan des figures.

Tous les moyens connus peuvent être utilisés pour rendre le caisson 40 solidaire du boîtier. Toutefois, dans le mode de réalisation préféré de l'invention, une paroi latérale du caisson 40 est portée par une paroi 48 associée du boîtier 12. Cette paroi latérale peut être constituée d'une paroi horizontale 44 ou d'une paroi verticale 46 du caisson 40 parallélépipédique.

Plus particulièrement, comme l'illustrent les figures 1 à 12 et la figure 14, la paroi latérale du caisson 40 qui est destinée à être portée par la paroi 48 du boîtier 12 porte deux ailes 50, dont chacune présente sensiblement en section la forme d'un "L" inversé, et qui sont reçues dans une glissière 52 qui est portée par la paroi 48 associée du boîtier 12 et qui est orientée parallèlement à la tige 20.

On remarquera que la paroi latérale qui est destinée à être portée par la paroi 48 du boîtier est en tout état de cause d'orientation axiale mais peut être orientée indifféremment dans un plan horizontal, vertical, et donc être constituée d'une paroi horizontale 44 ou d'une paroi verticale 46. Sur les figures, cette paroi latérale est une paroi horizontale 44.

En variante (non représentée) la paroi latérale qui est destinée à être portée par la paroi 48 pourrait aussi être agencée de manière intermédiaire entre la verticale ou l'horizontale, la reprise des efforts issus du poids du module d'éclairage 14 étant de toute façon assurée par les ailes 50 du caisson 40 et par la glissière 52 du boîtier 12.

Avantageusement, comme l'illustrent les figures 1, 2, 5a, 5b, 8, 11a, 11b, 12, et 14 le caisson 40 est de surcroît maintenu par l'intermédiaire d'une portée 54 tubulaire axiale du boîtier 12 qui entoure la tige 20 et qui traverse un perçage 56 d'une paroi verticale arrière 58 du caisson 40. Cette configuration permet de proposer un centrage supplémentaire du caisson 40.

L'élément 18 d'articulation entre le module d'éclairage 14 et le boîtier 12 peut être fixe ou mobile axialement selon les besoins de réglage du module d'éclairage 14. Ainsi, généralement, un boîtier 12 est fixé par l'intermédiaire d'au moins un élément 18 fixe axialement et d'au moins un élément 18 mobile axialement.

Selon un premier mode de réalisation d'un élément 18 d'articulation mobile qui a été représenté aux figures 1, 3a, 4, 5a 6, et 14, le caisson 40 comporte des moyens de verrouillage par rapport au boîtier 12. Dans cette configuration, la capsule 26 est mobile axialement en coulissement et libre en rotation par rapport au caisson fixe 40, et la tige 20, montée coulissante au travers de la portée 54 tubulaire du boîtier 12, permet de déplacer la capsule 26 dans le caisson 40 fixe entre les parois 44.

Pour verrouiller le caisson 40 par rapport au boîtier 12, les moyens de verrouillage comportent une agrafe 60 en accordéon dont un pli 62 est destiné à chevaucher une patte 64 en saillie du boîtier et dont un autre pli 66 est destiné à traverser une fente 68 de la paroi arrière 58 du caisson 40 et à pincer une paroi latérale du caisson agencée à proximité de la fente 68, par exemple et de manière non limitative de l'invention, une des parois 44.

Selon un premier mode de réalisation d'un élément 18 d'articulation fixe qui a été représenté aux figures 2, 3b, et 5b, le caisson 40 comporte des moyens de verrouillage par rapport au boîtier 12 et la tige 20 est fixée, notamment par vissage dans la portée 54 tubulaire du boîtier 12

Il sera compris que en variante, la tige 20 peut être emmanchée à force dans la portée 54 tubulaire du boîtier 12.

Comme dans le premier mode de réalisation de l'élément mobile, les moyens de verrouillage du caisson par rapport au boîtier comportent une agrafe 60 en accordéon dont un pli 62 est destiné à chevaucher une patte 64 en saillie du boîtier 12 et dont un autre pli 66 est destiné à traverser une fente 68 de la paroi arrière 58 du caisson 40 et à pincer une paroi latérale du caisson, notamment une paroi 44, agencée à proximité de la fente 68.

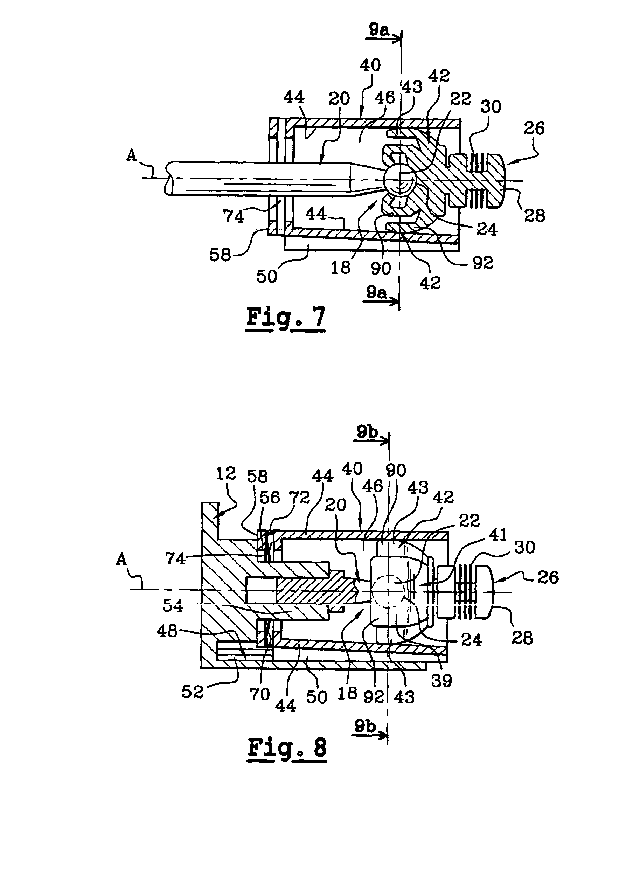

Selon un deuxième mode de réalisation d'un élément 18 d'articulation mobile qui a été représenté aux figures 7, 9a, 10 et 11a, le caisson 40 comporte aussi des moyens de verrouillage par rapport au boîtier 12. Dans cette configuration, la capsule 26 est mobile axialement en coulissement et libre en rotation par rapport au caisson 40 fixe, et la tige 20, montée coulissante au travers de la portée 54 tubulaire du boîtier, permet de déplacer la capsule 26 dans le caisson 40 fixe entre les parois 44.

Pour verrouiller le caisson 40 par rapport au boîtier 12, les moyens de verrouillage diffèrent des moyens de verrouillage précédents en ce qu'ils comportent une agrafe 70 qui est susceptible d'être introduite perpendiculairement à la direction axiale par une fente 72 d'une paroi latérale du caisson, par exemple mais non limitativement une paroi 44 dans un logement 74 du caisson qui est agencé en regard du perçage 56 de la paroi 58 verticale arrière du caisson 40 pour enserrer la portée 54 tubulaire du boîtier 12. Sur les figures, l'agrafe 70 est constituée d'une rondelle déformable 70, mais il sera compris qu'un cavalier coopérant avec une gorge (non représentée) agencée sur la portée tubulaire 54 pourrait aussi convenir à la réalisation de l'invention.

Selon un deuxième mode de réalisation d'un élément 18 d'articulation fixe qui a été représenté aux figures 8, 9b, et 11 b, le caisson 40 comporte aussi des moyens de verrouillage par rapport au boîtier 12 et la tige 20 est fixée, notamment par vissage, dans la portée tubulaire 54 du boîtier.

Comme dans le deuxième mode de réalisation de l'élément mobile, les moyens de verrouillage du caisson par rapport au boîtier comportent une agrafe 70, notamment une rondelle déformable 70, qui est susceptible d'être introduite perpendiculairement à la direction axiale par une fente 72 d'une paroi latérale du caisson, par exemple une paroi 44, dans un logement 74 du caisson 40 qui est agencé en regard du perçage 56 de la paroi 58 verticale arrière du caisson 40 pour enserrer la portée 54 tubulaire du boîtier 12. Là encore, un cavalier pourrait être utilisé en remplacement de la rondelle déformable constituant l'agrafe 70.

Selon un troisième mode de réalisation d'un élément 18 d'articulation mobile qui a été représenté à la figure 14, le caisson 40 ne comporte pas de moyens de verrouillage par rapport au boîtier 12. Dans cette configuration, la capsule 26 est fixe axialement en coulissement et libre en rotation par rapport au caisson qui est mobile, tout moyen connu pouvant être utilisé pour immobiliser la capsule 26 entre les parois 44 du caisson 40.

La tige 20, montée coulissante au travers de la portée 54 tubulaire du boîtier, permet de déplacer les ailes 50 du caisson 40 le long de la glissière 52.

Pour déplacer la tige 20, celle-ci est par exemple vissée avec un filetage réversible dans une douille 78 qui est montée elle-même de manière tournante dans une portée 55 agencée en arrière de la portée 54, et qui traverse le boîtier 12 au niveau de cette portée 55. A l'extérieur du boîtier 12, une périphérie 80 de la douille 78 porte un jeu de dentures 82 qui engrène avec un jeu de dentures 86 d'un pignon 84 d'axe radial perpendiculaire à la tige 20. L'entraînement du pignon radial 84, effectué par exemple par un axe 88 représenté en pointillés provoque la rotation de la douille 78 et le vissage ou dévissage de la tige 20 dans la douille 78, d'où un mouvement de translation de la tige 20

Dans le mode de réalisation de la figure 14, pour des raisons de lisibilité de la figure, on a dissocié la portée 55 du caisson 40 de la portée tubulaire 54, mais il sera compris que le caisson 40 peut bien évidemment être monté coulissant sur une unique portée tubulaire de longueur adaptée.

Enfin, selon un troisième mode de réalisation d'un élément 18 d'articulation fixe qui a été représenté à la figure 12, le caisson 40 comporte des moyens de verrouillage par rapport au boîtier 12. Dans ce mode particulier de réalisation, la tige 20 n'est pas portée directement par le boîtier 12 mais indirectement par l'intermédiaire d'un élément 76 parallélépipédique qui est emboîté dans le caisson 40.

Pour verrouiller le caisson 40 par rapport au boîtier, les moyens de verrouillage comportent une agrafe 70 qui est susceptible d'être introduite perpendiculairement à la direction axiale par une fente 72 d'une paroi 44 latérale du caisson 40 dans un logement 74 du caisson 40 qui est agencé en regard du perçage 56 de la paroi verticale arrière 58 du caisson 40 pour enserrer la portée tubulaire 54 du boîtier 12.

Il sera compris que, dans ce mode de réalisation, les moyens de verrouillage pourraient comporter une agrafe 60 en accordéon du type de celle précédemment décrite en référence à la figure 2 sans changer la nature de l'invention.

Conformément à l'invention, la capsule 26, lorsqu'elle est dédiée à la réalisation d'un élément d'articulation 18 mobile comme représenté aux figures 1, 3a, 4, 5a, 6, 7, 9a, 10, 11a et 14, n'est en contact dans le caisson 40 que par l'intermédiaire de ses au moins deux éléments 42 d'appui opposés verticalement.

En revanche, la capsule 26, lorsqu'elle est dédiée à la réalisation d'un élément d'articulation 18 fixe comme représenté aux figures 2, 3b, 5b, 8, 9b, 11b, et 12, est en contact dans le caisson par l'intermédiaire de ses deux éléments 42 d'appui et par l'intermédiaire d'au moins deux éléments 41 de maintien opposés horizontalement.

La capsule comporte en effet au moins deux éléments 41 supplémentaires de maintien, opposés horizontalement, qui sont reçus dans le caisson 40 entre deux parois 46 verticales opposées du caisson 40 parallélépipédique. Si la capsule 26 est dédiée à la réalisation d'un élément d'articulation 18 fixe, ces au moins deux éléments 41 supplémentaires de maintien sont reçus sans jeu au contact parois 46 verticales opposées du caisson 40 parallélépipédique. En revanche, si la capsule 26 est dédiée à la réalisation d'un élément d'articulation 18 mobile, ces au moins deux éléments 41 supplémentaires de maintien sont reçus avec jeu entre les parois 46 verticales opposées du caisson 40 parallélépipédique, sans contact avec celles-ci.

Afin de fournir un maintien satisfaisant de la capsule 26 lorsqu'elle est dédiée à la réalisation d'un élément 18 d'articulation fixe, chaque élément supplémentaire de maintien 41 présente, en section dans un plan horizontal parallèle à la direction axiale, une portée 39 de maintien de forme arrondie afin de permettre l'articulation horizontale de la capsule 26 dans le caisson 40 quelle que soit l'orientation du module 14 d'éclairage par rapport au boîtier 12. Cette portée 39 de maintien n'est pas utilisée lorsque la capsule 26 est dédiée à la réalisation d'un élément 18 d'articulation mobile.

L'invention présente un avantage notable par rapport aux conceptions issues de l'état de la technique en ce qu'elle propose une unique forme de capsule 26 adaptée indifféremment à la réalisation d'un élément 18 d'articulation fixe ou d'un élément 18 d'articulation mobile. Comme on va le voir dans la suite de la présente description, l'adaptation de la capsule 26 au type d'articulation désiré est effectuée par l'emploi de la capsule dans une position angulaire déterminée ou dans une autre qui lui est perpendiculaire et qui obtenue par rotation de la capsule 26.

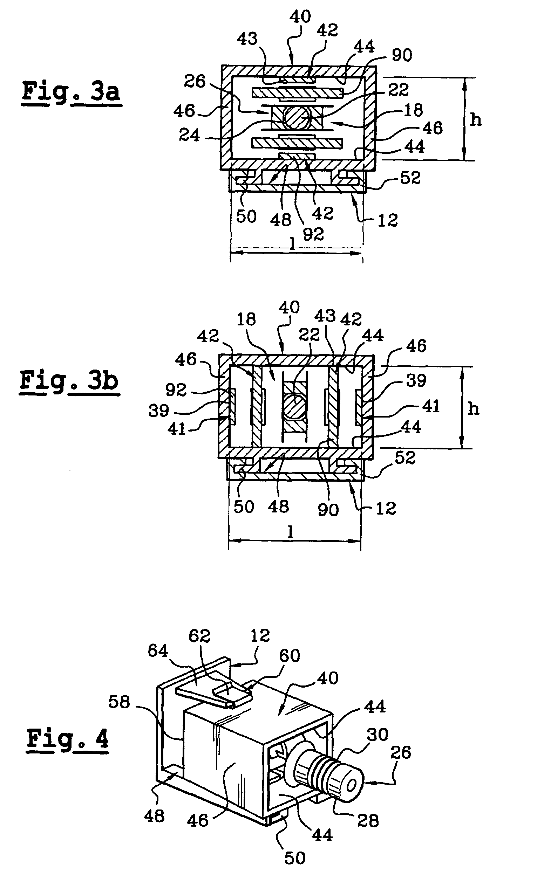

A cet effet, conformément à l'invention et comme représenté aux figures 3A, 3B, 9A, 9B le caisson 40 présente une section transversale sensiblement rectangulaire de dimension horizontale "l" supérieure à sa dimension verticale "h" et la capsule 26 comporte au moins deux pattes 90 rigides opposées d'un encombrement correspondant à la dimension "h" verticale et deux pattes élastiques 92 opposées d'un encombrement correspondant à la dimension "l" horizontale.

Conformément à l'invention, lorsque la capsule est dédiée à la réalisation d'un élément 18 d'articulation fixe comme représenté aux figures 2, 3b, 5b, 8, 9b, 11b, et 12, les au moins deux pattes rigides 90 forment les éléments d'appui 42 et les pattes élastiques 92 forment les éléments 41 de maintien.

Dans cette configuration, la capsule 26 est introduite dans le caisson 40 de manière que les pattes rigides 90 soient orientées verticalement et les pattes élastiques 92 sont orientées horizontalement. De ce fait les pattes rigides 90 comportent les portées d'appui 43 précédemment décrites qui sont au contact des parois horizontales 44 et les pattes élastiques 92 comportent les portées de maintien 39 qui sont au contact des parois verticales 46.

Conformément à l'invention, lorsque la capsule est dédiée à la réalisation d'un élément 18 d'articulation mobile comme représenté aux figures 1, 3a, 4, 5a, 6, 7, 9a, 10, 11a, les au moins deux pattes élastiques 92 forment les éléments d'appui 42 et les pattes rigides sont reçues avec jeu dans le caisson 40.

Dans cette configuration, la capsule 26 est introduite dans le caisson 40 de manière que les pattes élastiques 92 soient orientées verticalement et les pattes rigides sont orientées horizontalement. De ce fait les pattes élastiques 92 comportent les portées d'appui 43 précédemment décrites qui sont au contact des parois horizontales 44 et les pattes élastiques 90 ne sont pas au contact des parois verticales 46.

Ainsi, la même capsule 26 peut être associée indifféremment à la réalisation d'un élément 18 d'articulation fixe ou à la réalisation d'un élément 18 d'articulation mobile. Il suffit à cet effet de pivoter de 90 degrés la capsule 26 selon l'usage que l'on désire en faire.

Dans le mode réalisation préféré de l'invention, la capsule comporte quatre pattes rigides 90 deux à deux opposées deux à deux opposées par rapport au logement 24, dont les flancs opposés 94 délimitent une gouttière 24 constituant le logement 24.

Avantageusement, comme l'illustre la figure 1, les flancs 94 opposés des pattes rigides 90 délimitant la gouttière 24 comportent à leurs extrémités libres 96 des ergots 98 qui sont tournés vers l'intérieur de la gouttière 24 pour immobiliser la tête sphérique 22 de la tige 20

Plusieurs modes de réalisation peuvent être envisagés pour la réalisation des pattes élastiques 92.

Ainsi, selon une mode de réalisation de la capsule 26 qui a été représenté aux figures 1 à 12, chaque patte 92 élastique est conformée sous la forme d'une lame arrondie qui forme, selon l'utilisation de la capsule 26, la portée d'appui 43 ou la portée de maintien 39, et dont une seule extrémité 100 est solidaire de la capsule 26, l'autre extrémité 102 de la patte 92 élastique demeurant libre.

Selon un autre mode de réalisation de la capsule 26 qui a été représenté à la figure 14, chaque patte 92 élastique est conformée sous la forme d'une arche dont les deux extrémités 100, 102 sont solidaires de la capsule 26. Avantageusement, l'extrémité 102 peut notamment être solidaire de la patte 90 rigide voisine. De cette manière, chaque patte élastique 92 peut être déformées élastiquement vers l'axe "A" lors de son introduction dans le caisson 40. Par ailleurs, le profil en arche de chaque patte élastique 92 permet un contact quasi-ponctuel entre la patte 92 et la paroi 44, 46 horizontale ou verticale associée du caisson 40, ce qui facilite le pivotement de la capsule dans le caisson 40 pour effectuer un réglage du module d'éclairage 14. Cette configuration est évidemment transposable à l'ensemble des capsules décrites précédemment.

Enfin, on remarquera que, de préférence, les pattes élastiques 92 et les pattes rigides 90 sont venues de matière avec la capsule 26 qui est réalisée par exemple par moulage d'un matériau plastique.

L'invention propose donc un montage de projecteur éliminant tout risque de rupture des éléments 18 d'articulation.

## Revendications

1. Projecteur (10) d'éclairage de véhicule automobile, du type qui comporte au moins un boîtier (12) au moins ouvert vers l'avant à l'intérieur duquel est reçu un module (14) d'éclairage, notamment un réflecteur, dont une face arrière (19) est fixée dans le boîtier (12) par l'intermédiaire d'au moins un élément (18) d'articulation comportant une tige (20) de direction axiale sensiblement horizontale, portée par le boîtier (12), dont une extrémité comporte une tête sphérique (22) qui est reçue dans un logement (24) conforme d'une capsule (26) qui est solidaire du module (14) d'éclairage, de manière que l'élément (18) d'articulation forme une rotule, constituée de la tête sphérique (22) et du logement (24), permettant l'articulation du module (14) d'éclairage par rapport au boîtier (12) au moins autour de la rotule;
**caractérisé en ce qu'**il comporte au moins un caisson (40) de maintien, qui est traversé par au moins une partie de la tige (20), qui est porté par une paroi (48) du boîtier (12), et dont un logement reçoit la capsule (26) en appui vertical sensiblement au droit de la rotule, pour que le poids du module (14) d'éclairage soit reporté sur le boîtier (12) et éviter ainsi qu'il ne soit en porte-à-faux sur la rotule, et **en ce qu'**une paroi latérale (44) du caisson porte deux ailes (50) qui sont reçues dans une glissière (52) qui est portée par la paroi (48) associée du boîtier (12).

2. Projecteur (10) d'éclairage selon la revendication précédente, **caractérisé en ce que** le caisson (40) est creux et sensiblement parallélépipédique, et **en ce que** la capsule (26) comporte au moins deux éléments d'appui (42), opposés verticalement, qui sont reçus dans le caisson entre deux parois (44) horizontales opposées du caisson (40) parallélépipédique.

3. Projecteur (10) d'éclairage selon la revendication précédente, **caractérisé en ce que** chaque élément d'appui (42) présente, en section dans un plan vertical parallèle à la direction axiale, une portée (43)d'appui de forme arrondie afin de permettre l'articulation verticale de la capsule (26) dans le caisson (40) quelle que soit l'inclinaison du module (14) d'éclairage par rapport au boîtier (12).

4. Projecteur (10) d'éclairage selon l'une des quelconque des revendications 1 à 3, **caractérisé en ce qu'**une paroi latérale (44) du caisson (40) est portée par une paroi (48) associée du boîtier (12).

5. Projecteur (10) selon la revendication précédente, **caractérisé en ce que** la glissière (52) qui est portée par la paroi (48) associée du boîtier (12) est orientée parallèlement à la tige (20).

6. Projecteur (10) selon la revendication précédente, **caractérisé en ce que** le caisson (40) est de surcroît maintenu par l'intermédiaire d'une portée (54) tubulaire axiale du boîtier (12), entourant la tige (12), qui traverse un perçage (56) d'une paroi (58) verticale arrière du caisson (40).

7. Projecteur (10) selon l'une des revendications 5 ou 6, **caractérisé en ce que** le caisson (40) comporte des moyens de verrouillage par rapport au boîtier (12).

8. Projecteur (10) selon la revendication précédente, **caractérisé en ce que** les moyens de verrouillage comportent une agrafe (60) en accordéon dont un pli (62) est destiné à chevaucher une patte (64) en saillie du boîtier (12) et dont un autre pli (66) est destiné à traverser une fente (68) de la paroi (58) arrière du caisson (40) et à pincer une paroi latérale du caisson (40) agencée à proximité de la fente (68).

9. Projecteur (10) selon la revendication 7 prise en combinaison avec la revendication 6, **caractérisé en ce que** les moyens de verrouillage comportent une agrafe (70) qui est susceptible d'être introduite perpendiculairement à la direction axiale par une fente (72) d'une paroi latérale du caisson (40) dans un logement (74) du caisson (40) qui est agencé en regard du perçage (56) de la paroi verticale (58) arrière du caisson (40) pour enserrer la portée (54) tubulaire du boîtier (12).

10. Projecteur (10) selon les revendications 6 et 7 prises en combinaison avec l'une des revendications 8 ou 9, **caractérisé en ce que** l'élément (18) d'articulation est fixe et **en ce que** la tige (20) est fixée dans la portée tubulaire (54) du boîtier (12).

11. Projecteur (10) selon les revendications 6 et 7 prises en combinaison avec l'une des revendications 8 ou 9, **caractérisé en ce que** l'élément (18) d'articulation est fixe et **en ce que** la tige (20) est portée par un élément (76) parallélépipédique qui est emboîté dans le caisson (40).

12. Projecteur (10) d'éclairage selon l'une des revendications 10 ou 11, **caractérisé en ce que** la capsule comporte au moins deux éléments (41) supplémentaires de maintien, opposés horizontalement, qui sont reçus dans le caisson entre deux parois (46) verticales opposées du caisson (40) parallélépipédique.

13. Projecteur d'éclairage selon la revendication précédente, **caractérisé en ce que** chaque élément supplémentaire (41) de maintien présente, en section dans un plan horizontal parallèle à la direction axiale, une portée (39) de maintien de forme arrondie afin de permettre l'articulation horizontale de la capsule (26) dans le caisson (40) quelle que soit l'orientation du module (14) d'éclairage par rapport au boîtier (12).

14. Projecteur (10) selon la revendication 6, **caractérisé en ce que** l'élément (18) d'articulation est mobile, la capsule (26) étant fixe axialement et libre en rotation par rapport au caisson (40) mobile, et **en ce que** la tige (20) est montée coulissante au travers de la portée (54) tubulaire du boîtier (12).

15. Projecteur (10) selon les revendications 6 et 7 prises en combinaison avec l'une des revendications 8 ou 9, **caractérisé en ce que** l'élément (18) d'articulation est mobile, la capsule (26) étant mobile axialement en coulissement et libre en rotation par rapport au caisson (40) fixe, et **en ce que** la tige (20) est montée coulissante au travers de la portée (54) tubulaire du boîtier (12).

16. Projecteur (10) selon l'une quelconque des revendications 1 à 9, **caractérisé en ce que** le caisson (40) présente une section transversale sensiblement rectangulaire de dimension horizontale (1) supérieure à sa dimension verticale (h) et **en ce que** la capsule (26) comporte au moins deux pattes rigides (90) opposées d'un encombrement correspondant à la dimension verticale (h) et deux pattes élastiques (92) opposées d'un encombrement correspondant à la dimension (1) horizontale.

17. Projecteur (10) selon la revendication précédente prise en combinaison avec l'une quelconque des revendications 12 ou 13, **caractérisé en ce que** les pattes rigides (90) forment les éléments d'appui (42) et **en ce que** les pattes élastiques (92) forment les éléments (41) de maintien, pour former l'élément (18) d'articulation fixe.

18. Projecteur (10) selon la revendication 16 prise en combinaison avec l'une des revendications 14 ou 15, **caractérisé en ce que** les pattes élastiques (92) forment les éléments d'appui (42), les pattes rigides (90) étant reçues avec jeu dans le caisson (40), pour former l'élément (18) d'articulation mobile.

19. Projecteur (10) selon l'une des revendications 16 à 18, **caractérisé en ce que** la capsule (26) comporte quatre pattes rigides (90), deux à deux opposées par rapport au logement (24), dont les flancs (94) opposés délimitent une gouttière constituant le logement (24).

20. Projecteur (10) selon la revendication précédente, **caractérisé en ce que** les flancs (94) opposés des pattes rigides (90) délimitant la gouttière (24) comportent à leurs extrémités libres (96) des ergots (98) qui sont tournés vers l'intérieur de la gouttière (24) pour immobiliser la tête sphérique (22) de la tige (20).

21. Projecteur (10) selon l'une des revendications 16 à 20, **caractérisé en ce que** chaque patte (92) élastique est conformée sous la forme d'une lame arrondie dont une seule extrémité (100) est solidaire de la capsule (26).

22. Projecteur (10) selon l'une des revendications 16 à 20, **caractérisé en ce que** chaque patte (92) élastique est conformée sous la forme d'une arche dont les deux extrémités (100, 102) sont solidaires de la capsule (26), une d'entre elles étant notamment solidaire de la patte rigide (90) voisine.

23. Projecteur selon l'une quelconque des revendications 16 à 21, **caractérisé en ce que** les pattes élastiques (92) et les pattes rigides (90) sont venues de matière avec la capsule (26).

## Patentansprüche

1. Kraftfahrzeugscheinwerfer (10), des Typs mit wenigstens einem zumindest nach vorne offenen Gehäuse (12), in dessen Innenraum ein Beleuchtungsmodul (14), insbesondere ein Reflektor, aufgenommen ist, von dem eine Rückseite (19) in dem Gehäuse (12) durch wenigstens ein Gelenkelement (18) befestigt ist, welches eine von dem Gehäuse (12) getragene Stange (20) mit im Wesentlichen waagerechter Achsrichtung aufweist, die an einem Ende einen kugelförmigen Kopf (22) umfasst, der in einem Sitz (24) in Form einer Kapsel (26), welche mit dem Beleuchtungsmodul (14) fest verbunden ist, derart aufgenommen ist, dass das Gelenkelement (18) ein aus dem kugelförmigen Kopf (22) und dem Sitz (24) bestehendes Kugelgelenk bildet, das die Schwenkbarkeit des Beleuchtungsmoduls (14) in Bezug auf das Gehäuse (12) wenigstens um das Kugelgelenk ermöglicht, **dadurch gekennzeichnet, dass** er wenigstens einen Haltekasten (40) aufweist, der von wenigstens einem Teil der Stange (20) durchquert wird, der von einer Wand (48) des Gehäuses (12) getragen wird und von dem eine Aufnahme die Kapsel (26) im Wesentlichen senkrecht zu dem Kugelgelenk abgestützt aufnimmt, um das Gewicht des Beleuchtungsmoduls (14) auf das Gehäuse (12) zu übertragen und auf diese Weise zu vermeiden, dass es fliegend über das Kugelgelenk gelagert ist, und dass eine Seitenwand (44) des Kastens zwei Flügel (50) aufweist, die in einer Gleitführung (52) aufgenommen sind, welche von der dem Gehäuse (12) zugeordneten Wand (48) getragen ist.

2. Scheinwerfer (10) nach dem vorhergehenden Anspruch,
**dadurch gekennzeichnet, dass** der Kasten (40) hohl und im Wesentlichen parallelepipedisch ist, und dass die Kapsel (26) wenigstens zwei senkrecht gegenüberliegende Stützelemente (42) aufweist, die in dem Kasten zwischen zwei gegenüberliegenden, waagerechten Wänden (44) des parallelepipedischen Kastens (40) aufgenommen sind.

3. Scheinwerfer (10) nach dem vorhergehenden Anspruch,
**dadurch gekennzeichnet, dass** jedes Stützelement (42) im Querschnitt in einer senkrechten, zur Achsrichtung parallelen Ebene eine abgerundete Auflagefläche (43) aufweist, um, unabhängig von der Neigung des Beleuchtungsmoduls (14) bezüglich des Gehäuses (12) das senkrechte Schwenken der Kapsel (26) in dem Kasten (40) zu ermöglichen.

4. Scheinwerfer (10) nach einem der Ansprüche 1 bis 3,
**dadurch gekennzeichnet, dass** eine Seitenwand (44) des Kastens (40) von einer dem Gehäuse (12) zugeordneten Wand (48) getragen wird.

5. Scheinwerfer (10) nach dem vorhergehenden Anspruch,
**dadurch gekennzeichnet, dass** die Gleitführung (52), die von der dem Gehäuse (12) zugeordneten Wand (48) getragen wird, parallel zu der Stange (20) ausgerichtet ist.

6. Scheinwerfer (10) nach dem vorhergehenden Anspruch,
**dadurch gekennzeichnet, dass** der Kasten (40) ferner mit Hilfe einer axialen, röhrenförmigen Auflagefläche (54) des Gehäuses (12) gehalten wird, die die Stange (20) umgibt und eine Bohrung (56) einer senkrechten Rückwand (58) des Kastens (40) durchquert.

7. Scheinwerfer (10) nach einem der Ansprüche 5 oder 6,
**dadurch gekennzeichnet, dass** der Kasten (40) Mittel zur Verriegelung in Bezug auf das Gehäuse (12) umfasst.

8. Scheinwerfer (10) nach dem vorhergehenden Anspruch,
**dadurch gekennzeichnet, dass** die Verriegelungsmittel eine Zickzackfalzung (60) aufweisen, von der ein Falz (62) dazu bestimmt ist, eine überstehende Lasche (64) des Gehäuses (12) zu überlappen, und ein anderer Falz (66) dazu bestimmt ist, einen Spalt (68) in der Rückwand (58) des Kastens (40) zu durchqueren und eine in der Nähe des Spalts (68) angeordnete Seitenwand des Kastens (40) zu umklammern.

9. Scheinwerfer (10) nach Anspruch 7 in Verbindung mit Anspruch 6,
**dadurch gekennzeichnet, dass** die Verriegelungsmittel eine Klammer (70) aufweisen, die senkrecht zur Achsrichtung durch einen Schlitz (72) einer Seitenwand des Kastens (40) in eine Lagerung (74) des Kastens (40) einführbar ist, welche gegenüber der Bohrung (56) der senkrechten Rückwand (58) des Kastens (40) angeordnet ist, um die röhrenförmige Auflagefläche (54) des Gehäuses (12) zu umfassen.

10. Scheinwerfer (10) nach Anspruch 6 und 7 in Verbindung mit einem der Ansprüche 8 oder 9,
**dadurch gekennzeichnet, dass** das Gelenkelement (18) feststehend ist, und dass die Stange (20) in der röhrenförmigen Auflagefläche (54) des Gehäuses (12) befestigt ist.

11. Scheinwerfer (10) nach Anspruch 6 und 7 in Verbindung mit einem der Ansprüche 8 oder 9,
**dadurch gekennzeichnet, dass** das Gelenkelement (18) feststehend ist und dass die Stange (20) von einem parallelepipedischen Element (76) getragen wird, das in den Kasten (40) eingesteckt ist.

12. Scheinwerfer (10) nach einem der Ansprüche 10 oder 11,
**dadurch gekennzeichnet, dass** die Kapsel wenigstens zwei zusätzliche, waagerecht gegenüberliegende Halteelemente (41) umfasst, die in dem Kasten zwischen zwei gegenüberliegenden; senkrechten Wänden (46) des parallelepipedischen Kastens (40) aufgenommen sind.

13. Scheinwerfer (10) nach dem vorhergehenden Anspruch,
**dadurch gekennzeichnet, dass** jedes zusätzliche Halteelement (41) im Querschnitt in einer waagerechten, zur Achsrichtung parallelen Ebene eine abgerundete Haltefläche (39) aufweist, um unabhängig von der Ausrichtung des Beleuchtungsmoduls (14) bezüglich des Gehäuses (12) das waagerechte Schwenken der Kapsel (26) in dem Kasten (40) zu ermöglichen.

14. Scheinwerfer (10) nach Anspruch 6,
**dadurch gekennzeichnet, dass** das Gelenkelement (18) beweglich ist, wobei die Kapsel (26) axial feststehend ist und in Bezug auf den beweglichen Kasten (40) drehbeweglich ist, und dass die Stange (20) durch die röhrenförmige Auflagefläche (54) des Gehäuses (12) verschiebbar angebracht ist.

15. Scheinwerfer (10) nach Anspruch 6 und 7 in Verbindung mit einem der Ansprüche 8 oder 9,
**dadurch gekennzeichnet, dass** das Gelenkelement (18) beweglich ist, wobei die Kapsel (26) axial verschiebbar ist und in Bezug auf den feststehenden Kasten (40) drehbeweglich ist, und dass die Stange (20) durch die röhrenförmige Auflagefläche (54) des Gehäuses (12) verschiebbar angebracht ist.

16. Scheinwerfer (10) nach einem der Ansprüche 1 bis 9,
**dadurch gekennzeichnet, dass** der Kasten (40) einen im Wesentlichen rechteckigen Querschnitt aufweist, dessen waagerechte Abmessung (I) größer als seine senkrechte Abmessung (h) ist, und dass die Kapsel (26) wenigstens zwei gegenüberliegende starre Laschen (90) mit einem der senkrechten Abmessung (h) entsprechenden Raumbedarf und zwei gegenüberliegende elastische Laschen (92) mit einem der waagerechten Abmessung (I) entsprechenden Raumbedarf aufweist.

17. Scheinwerfer (10) nach dem vorhergehenden Anspruch in Verbindung mit einem der Ansprüche 12 oder 13,
**dadurch gekennzeichnet, dass** die starren Laschen (90) die Stützelemente (42) bilden, und dass die elastischen Laschen (92) die Halteelemente (41) bilden, um das feststehende Gelenkelement (18) zu bilden.

18. Scheinwerfer (10) nach Anspruch 16 in Verbindung mit einem der Ansprüche 14 oder 15,
**dadurch gekennzeichnet, dass** die elastischen Laschen (92) die Stützelemente (42) bilden, während die starren Laschen (90) mit Spiel in dem Kasten (40) aufgenommen sind, um das bewegliche Gelenkelement (18) zu bilden.

19. Scheinwerfer (10) nach einem der Ansprüche 16 bis 18,
**dadurch gekennzeichnet, dass** die Kapsel (26) vier starre Laschen (90) aufweist, die in Bezug auf den Sitz (24) paarweise gegenüberliegend angeordnet sind und deren gegenüberliegende Seitenteile (94) eine den Sitz (24) bildende Rinne begrenzen.

20. Scheinwerfer (10) nach dem vorhergehenden Anspruch,
**dadurch gekennzeichnet, dass** die die Rinne (24) begrenzenden, gegenüberliegenden Seitenteile (94) der starren Laschen (90) an ihren freien Enden (96) Zapfen (98) aufweisen, die zur Innenseite der Rinne (24) gewandt sind, um den kugelförmigen Kopf (22) der Stange (20) festzusetzen.

21. Scheinwerfer (10) nach einem der Ansprüche 16 bis 20,
**dadurch gekennzeichnet, dass** jede elastische Lasche (92) in Form einer abgerundeten Zunge ausgebildet ist, von der nur ein Ende (100) mit der Kapsel (26) fest verbunden ist.

22. Scheinwerfer (10) nach einem der Ansprüche 16 bis 20,
**dadurch gekennzeichnet, dass** jede elastische Lasche (92) in Form eines Bogens ausgebildet ist, dessen zwei Enden (100, 102) mit der Kapsel (26) fest verbunden sind, wobei eines der Enden insbesondere fest mit der benachbarten starren Lasche (90) verbunden ist.

23. Scheinwerfer nach einem der Ansprüche 16 bis 21,
**dadurch gekennzeichnet, dass** die elastischen Laschen (92) und die starren Laschen (90) einstückig mit der Kapsel (26) ausgebildet sind.

## Claims

1. A motor vehicle headlight (10), of the type which comprises at least one casing (12) which is open at least towards the front, and in the interior of which there is received a lighting module (14), in particular a reflector, a rear face (19) of which is fixed in the casing (12) by means of at least one articulating element (18) comprising a rod (20) having a substantially horizontal axial direction and carried by the casing (12), one end of the said rod comprising a spherical head (22) which is received in a matching socket (24) formed in a capsule (26), which is fixed with respect to the lighting module (14), whereby the articulating element (18) is a ball joint consisting of the spherical head (22) and the socket (24), whereby the lighting module (14) is articulated with respect to the casing (12), at least about the ball and socket joint; and at least one retaining sheath (40), through which at least part of the rod (20) extends and which is carried by a wall (48) of the casing (12), the sheath defining a housing which receives the capsule (26) in vertical engagement substantially in line with the ball and socket joint, so that the weight of the lighting module (14) is taken on the casing (12), so avoiding cantilevering of the lighting module on the ball and socket joint, wherein a side wall (44) of the sheath carries two wing elements (50) which are received in a slide (52) which is carried by the associated wall (48) of the casing (12).

2. A headlight (10) according to Claim 1, **characterised in that** the sheath (40) is hollow and substantially in the form of a parallelepiped, and **in that** the capsule (26) includes at least two abutment elements (42) opposed vertically to each other, which are received in the sheath between two opposed horizontal walls (44) of the parallelepiped sheath (40).

3. A headlight (10) according to Claim 2, **characterised in that** each abutment element (42) has, in cross section in a vertical plane parallel to the axial direction, an abutment surface (43) of rounded form such as to permit the capsule (26) to be articulated vertically in the sheath (40), whatever may be the inclination of the lighting module (14) with respect to the casing (12).

4. A headlight (10) according to one of Claims 1 to 3, **characterised in that** a side wall (44) of the sheath (40) is carried by an associated wall (48) of the casing (12).

5. A headlight (10) according to Claim 4, **characterised in that** the slide (52) which is carried by the associated wall (48) of the casing (12) is oriented parallel to the rod (20).

6. A headlight (10) according to Claim 5, **characterised in that** the sheath (40) is, in addition, held by means of an axial, tubular surface (54) of the casing (12) surrounding the rod (12), which extends through an aperture (56) in a rear vertical wall (58) of the sheath (40).

7. A headlight (10) according to Claim 5 or Claim 6, **characterised in that** the sheath (40) includes means for locking it with respect to the casing (12).

8. A headlight (10) according to Claim 7, **characterised in that** the locking means comprise an accordion type clip (60), a bent portion (62) of which is adapted to embrace a projecting lug (64) of the casing (12), with a further bent portion (66) of the clip being adapted to extend through a slot (68) in the rear wall (58) of the sheath (40), and to grip a side wall of the sheath (40) arranged close to the slot (68).

9. A headlight (10) according to Claim 7 taken in combination with Claim 6, **characterised in that** the locking means comprise a clip (70) which is adapted to be introduced, at right angles to the axial direction, through a slot (72) in a side wall of the sheath (40), into a housing (74) in the sheath (40) which is arranged facing the aperture (56) in the vertical rear wall (58) of the sheath (40), so as to embrace the tubular surface (54) of the casing (12).

10. A headlight (10) according to Claims 6 and 7 taken in combination with Claim 8 or Claim 9, **characterised in that** the articulating element (18) is fixed, and **in that** the rod (20) is fixed in the tubular surface (54) of the casing (12).

11. A headlight (10) according to Claims 6 and 7 taken in combination with Claim 8 or Claim 9, **characterised in that** the articulating element (18) is fixed, and **in that** the rod (20) is carried by an element (76) in the form of a parallelepiped, which is nested within the sheath (40).

12. A headlight (10) according to Claim 10 or Claim 11, **characterised in that** the capsule includes at least two additional retaining elements (41), horizontally opposed to each other and received in the sheath between two opposed vertical walls (46) of the parallelepiped sheath (40).

13. A headlight (10) according to Claim 12, **characterised in that** each additional retaining element (41) has, in cross section in a horizontal plane parallel to the axial direction, a rounded retaining surface (39), for affording horizontal articulation of the capsule (26) in the sheath (40) regardless of the orientation of the lighting module (14) with respect to the casing (12).

14. A headlight (10) according to Claim 6, **characterised in that** the articulating element (18) is movable, the capsule (26) being fixed axially and free to rotate with respect to the movable sheath (40), and **in that** the rod (20) is mounted for sliding movement across the tubular surface (54) of the casing (12).

15. A headlight (10) according to Claims 6 and 7 taken in combination with Claim 8 or Claim 9, **characterised in that** the articulating element (18) is movable, the capsule (26) being movable axially in sliding movement and free to rotate with respect to the fixed sheath (40), and **in that** the rod (20) is mounted for sliding movement across the tubular surface (54) of the casing (12).

16. A headlight (10) according to any one of Claims 1 to 9, **characterised in that** the sheath (40) has a substantially rectangular transverse cross section, the horizontal dimension (1) of which is greater than its vertical dimension (h), and **in that** the capsule (26) includes at least two opposed rigid lugs (90), which extend in a direction corresponding to the vertical dimension (h), together with two opposed elastic lugs (92) which extend in a direction corresponding to the horizontal dimension (1).

17. A headlight (10) according to Claim 16 taken in combination with Claim 12 or Claim 13, **characterised in that** the rigid lugs (90) constitute the abutment elements (42), and **in that** the elastic lugs (92) constitute the retaining elements (41), to form the fixed articulating element (18).

18. A headlight (10) according to Claim 16 taken in combination with Claim 14 or Claim 15, **characterised in that** the elastic lugs (92) constitute the abutment elements (42), the rigid lugs (90) being received with a clearance in the sheath (40), whereby to constitute the movable articulating element (18).

19. A headlight (10) according to one of Claims 16 to 18, **characterised in that** the capsule (26) includes four rigid lugs (90), opposed in pairs with respect to the socket (24) and having opposed flanks (94) defining a channel which constitutes the socket (24).

20. A headlight (10) according to Claim 19, **characterised in that** the opposed flanks (94) of the rigid lugs (90), defining the channel (24), include, at their free ends (96), finger elements (98) which are turned towards the interior of the socket (24) whereby to immobilise the spherical head (22) of the rod (20).

21. A headlight (10) according to one of Claims 16 to 20, **characterised in that** each elastic lug (92) is configured in the form of a rounded leaf, only one end (100) of which is fixed with respect to the capsule (26).

22. A headlight (10) according to one of Claims 16 to 20, **characterised in that** each elastic lug (92) is configured in the form of an arch, both ends (100, 102) of which are fixed to the capsule (26), with one of the said ends being in particular fixed to the neighbouring rigid lug (90).

23. A headlight (10) according to any one of Claims 16 to 21, **characterised in that** the elastic lugs (92) and the rigid lugs (90) are formed integrally with the capsule (26).
